# EUROPÄISCHE PATENTANMELDUNG

(11) **EP 0 895 953 A1**
(43) Veröffentlichungstag der Anmeldung: **10.02.1999**
(21) Anmeldenummer: 97113576.9
(22) Anmeldetag: 06.08.1997
(51) Int. Cl.: B65H 19/28

(54) **Klebebandrolle mit selbstklebendem Endstreifen**

(71) Anmelder: Scapa Tapes (Schweiz) AG, 9400 Rorschach (CH)
(72) Erfinder: Siegel, Lutz, 9400 Rorschach (CH); Schär, Urs, 9400 Rorschacherberg (CH); Toppel, Daniel, 9320 Arbon (CH)
(74) Vertreter: Kindler, Matthias, Dr. Dipl.-Chem.

(57) **Zusammenfassung**

Die Erfindung betrifft eine Klebebandrolle mit einem Endstreifen sowie ein Verfahren zu ihrer Herstellung. Die Klebebandrolle umfaßt ein Klebeband, an dessen außenliegendem Ende ein Endstreifen angebracht ist, die dadurch gekennzeichnet ist, daß der Endstreifen innenseitig teilflächig oder ganzflächig mit einem Haftkleber beschichtet ist. Die erfindungsgemäße Klebebandrolle zeichnet sich dadurch aus, daß der Endstreifen nicht von der Klebebandrolle absteht und somit ein automatisches Verpacken der Klebebandrolle mit dem Sleeve-Verfahren möglich ist.

## Beschreibung

Die Erfindung betrifft eine Klebebandrolle mit einem Endstreifen sowie ein Verfahren zur ihrer Herstellung.

Klebebandrollen mit einem Endstreifen sind bereits bekannt. Der Endstreifen ermöglicht es dem Anwender, den Klebebandanfang leichter zu erkennen und zu greifen. Die klebende Seite des Klebebandes weist hierbei zur Mitte der Klebebandrolle. Am äußeren Ende des Klebebandes ist der Endstreifen befestigt, der sich in der Regel farblich von dem Klebeband abhebt. Das Klebeband ist in der Regel auf einem Trägerring aufgewickelt.

Bisher bekannte Endstreifen stehen von der Klebebandrolle ab. Ein solches Abstehen des Endstreifens bereitet jedoch insbesondere bei der Verpackung der Klebebandrollen Probleme. Klebebandrollen werden mit dem sog. Sleeve-Verfahren verpackt, wobei ein Kunststoffschlauch über die Klebebandrolle gestülpt und dann in einem Wärmekanal geschrumpft wird. Dabei können die abstehenden Endstreifen den Schrumpfbeutelschlauch berühren, wodurch sich der Schrumpfbeutelschlauch nicht mehr konzentrisch um die Klebebandrolle legen läßt. Hierdurch wird eine Automatisierung der Schrumpfverpackung verunmöglicht, da der Schrumpfbeutelschlauch schief liegt und ein vollständiges, sauberes Umhüllen der Klebebandrollen nach dem Schrumpfprozeß im Ofen nicht mehr möglich ist. Dadurch kommt es zu Handeinsatz, damit gewährleistet ist, daß jede Klebebandrolle konzentrisch von dem Schrumpfbeutelschlauch umgeben ist.

Dieser Erfindung liegt daher die Aufgabe zugrunde, Klebebandrollen mit einem Endstreifen zur Verfügung zu stellen, die ein automatisches Verpacken mit dem Sleeve-Verfahren ermöglichen.

Diese Aufgabe wird erfindungsgemäß gelöst durch eine Klebebandrolle, umfassend ein Klebeband, an dessen außenliegendem Ende ein Endstreifen angebracht ist, die dadurch gekennzeichnet ist, daß der Endstreifen innenseitig teilflächig oder ganzflächig mit einem Haftkleber beschichtet ist.

Eine teilflächige oder ganzflächige, innenseitige Beschichtung des Endstreifens mit einem Haftkleber gewährleistet, daß der Endstreifen nicht von der Klebebandrolle absteht, wodurch eine Automatisierung der Verpackung der Klebebandrollen mit dem Sleeve-Verfahren ermöglicht wird. Die teilflächige Beschichtung des Endstreifens mit einem Haftkleber kann in einem beliebigen Muster vorliegen und schließt beispielsweise ein punktförmiges oder streifenförmiges Aufbringen des Haftklebers ein. Weiterhin wird hier unter einer teilflächigen Beschichtung des Endstreifens auch die Beschichtung von Endstreifen verstanden, die perforiert oder in einer beliebigen Form ausgestanzt vorliegen. Beispielsweise kann aus dem Material des Endstreifens ein feines Muster von ausgestanzten Punkten in regelmäßigem Abstand vorliegen, wodurch die Rauhigkeit des Endstreifens erhöht ist, oder eine ausgestanzte Fläche in Form beispielsweise eines Dreiecks oder eines Kreises vorliegen, was ein leichteres Greifen des Endstreifens zur Folge hat. Unter innenseitiger Beschichtung wird hierbei die Seite des Endstreifens bezeichnet, die zur Mitte der Klebebandrolle, also in der Regel zum Trägerring hinweist.

Vorzugsweise beträgt die Klebkraft des Endstreifens gegenüber Stahl 0,01 bis 40 N/25 mm, besonders bevorzugt 1 bis 25 N/25 mm (nach AFERA 4001, PSTC-1, Auswertung nach DIN 53539C).

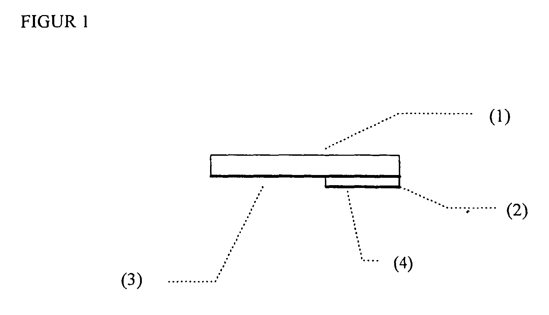

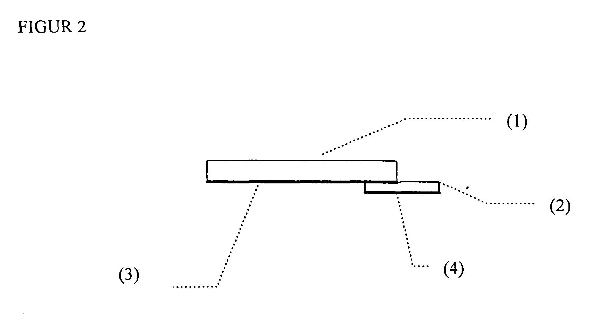

Der erfindungsgemäß verwendete Endstreifen wird derart mit dem Klebeband verbunden, daß die Innenseite des Klebebandes, d.h. die Haftkleber tragende Seite des Klebebandes, an der Außenseite des Endstreifens, d.h. der Seite des Endstreifens ohne Haftkleber, anliegt. Die Figuren 1 und 2 stellen den schematischen Aufbau von verschiedenen Variationen der erfindungsgemäßen Verbindung zwischen Endstreifen und Klebeband dar.
Figur 1:
   Die Außenseite des erfindungsgemäß verwendeten Endstreifens (2) liegt vollständig an der Haftkleber (3) tragenden Seite des Klebebandes (1) an.
Figur 2:
   Die Außenseite des erfindungsgemäß verwendeten Endstreifens (2) liegt teilweise an der Haftkleber (3) tragenden Seite des Klebebandes (1) an.

Der Endstreifen (2) der erfindungsgemäßen Klebebandrolle kann aus Textil, einem Papier, einem Karton, einer Kunststoffolie, einem Kunststoffschaum oder einer Metallfolie, vorzugsweise aber aus Papier oder einer Kunststoffolie, bestehen.

Das erfindungsgemäß verwendete Papier ist nicht beschränkt, jedoch wird vorteilhaft ein farbiges Druckpapier zu 30 bis 80 g/m² verwendet, das ein- oder beidseitig bedruckt sein kann.

Besteht der Endstreifen (2) aus einer Kunststoffolie, so besteht diese vorzugsweise aus Homo- oder Copolymeren von Ethylen, Propylen und Vinylchlorid, Polyamid, Polyester oder Polyimid oder Mischungen aus zwei oder mehreren dieser Polymere. Die Homopolymere können Polyethylen, Polypropylen, Polyethylenterephthalat oder Polyvinylchlorid sein. Die Copolymere können aus zwei oder mehreren von Ethylen, Propylen und Vinylchlorid sowie wahlweise aus weiteren Monomeren wie Alkenen mit 4 bis 8 Kohlenstoffatomen zusammengesetzt sein. Der Polyester kann Polyethylenterephthalat sein.

Endstreifen (2) aus einer Kunststoffolie können wie die Endstreifen (2) aus Papier farbig oder auch transparent sein.

Vorzugsweise trägt der Endstreifen (2) an seiner Außenseite, d.h. an der von der Mitte der Klebebandrolle abgewandten Seite, eine antihaftende Schicht (release coating). Die antihaftende Schicht ist bei Verwendung von Kunststoffolien als Endstreifen besonders bevorzugt. Die antihaftenden Schichten bestehen im allgemeinen aus Polymeren mit einem hohen Molekulargewicht und einer geringen kritischen Oberflächenenergie. Die Polymere dürfen mit dem Haftkleber nicht mischbar sein, so daß sie nicht in diesen hineindiffundieren und die Klebkraft des Haftklebers beeinträchtigen. Beispiele für die Polymere der antihaftenden Schichten sind Polyvinylstearylcarbamate, Polyvinylstearylmethacrylate, vernetzte Silikonkautschuke, vernetzte Polydimethylsiloxane, Polyoctadecylvinylethermaleinsäureanhydride, koordinierte Chromkomplex-Fettsäuren, Fluorkohlenwasserstoffe und Tristearyltetraethylenpentamine. Die antihaftenden Schichten werden vorzugsweise in einer Menge von 0,01 bis 5 g/m² aufgetragen. Der Vorteil der antihaftenden Schicht beruht auf der leichteren Bearbeitbarkeit des Endstreifenmaterials. So läßt sich das Endstreifenmaterial samt Haftkleber beispielsweise bei Vorhandensein einer antihaftenden Schicht problemlos ab- und aufwickeln.

Die Innenseite des Endstreifens trägt eine Haftklebeschicht (4), die einen Schmelzklebstoff, einen Lösungs- oder Dispersionsklebstoff enthalten kann. Der für den Endstreifen verwendete Klebstoff kann mit dem für das Klebeband verwendeten Klebstoff identisch sein.

Die erfindungsgemäß verwendbaren Schmelzkleber umfassen thermoplastische Rückgratpolymere und gegebenenfalls ein Klebharz, einen Weichmacher, ein viskositätserniedrigendes Mittel und/oder einen Stabilisator.

Geeignete thermoplastische Rückgratpolymere sind z.B. natürlicher Kautschuk; synthetischer Kautschuk wie SBS, SIS, SEBS (Styrol/Ethylen/Butadien/Styrol), SEPS (Styrol/Ethylen/Propylen/Styrol) (Triblockcopolymere) und S-B, S-I, S-EP (Diblockcopolymere); Polyolefine wie ataktisches Polypropylen, Ethylen-Propylen-Butadien-Copolymer; Polyacrylate wie Polybutylacrylsäureester, Poly(2-ethylhexylacrylsäureester), Polymethacrylsäureester und deren Copolymere mit z.B. Acrylsäure, Methacrylsäure, Vinylacetat, Maleinsäureanhydrid, Diacetonacrylamid oder Acrylnitril; Polyvinylderivate wie Ethylen-Vinylacetat-Copolymer, (1-Vinyl-2-pyrrolidon)-Vinylacetat-Copolymer, Vinylacetat-Vinyllaurat-Copolymer; Polyamide wie Diethylentriaminpolyamid; Copolyamide; Polyester; Copolyester; Copolyetherester; Polyurethane und Silicone. Diese Rückgratpolymere können als Copolymerisate oder als Gemische untereinander vollständig vernetzt oder durch UV- oder Elektronenstrahlung nachvernetzbar eingesetzt werden.

Geeignete Klebharze sind z.B. aliphatische, alicyclische und aromatische Kohlenwasserstoffe; Polyterpene; Kolophoniumester wie Kolophonium-Glycerin-Ester, hydrierter Kolophonium-Pentaerythrit-Ester und polymerisierte Kolophonium-Diethylenglykol-Ester sowie polymerisiertes Kolophonium.

Geeignete Weichmacher sind z.B. Phthalate wie Diethylphthalat, Dioctylphthalat, Diisodecylphthalat.

Geeignete viskositätserniedrigende Additive sind z.B. aliphatische, alicyclische und aromatische Kohlenwasserstoffe.

Geeignete Stabilisatoren sind z.B. Tetrakis[methylen-3-(3',5'-di-tert.butyl-4'-hydroxyphenyl)propionat]methan; 1,3,5-Trimethyl-2,4,6-tris(3,5-di-tert.butyl-4-hydroxybenzyl)benzol; 4,4'-Thiobis-(6-tert.butyl-m-kresol); Zinkdibutyldithiocarbamat; Dibutylthioharnstoff; Octylphenylsalicylat; 2-Hydroxy-4-(2-hydroxy-3-methacryloxy) propiobenzophenon und Octa-decyl-3-(3',5'-di-tert.butyl-4'-hydroxyphenyl)propionat.

Die Auftragsmenge des Haftklebers (4) hängt von der Art des verwendeten Klebers wie auch vom Material des Endstreifens (2) ab. Wird Papier als Endstreifenmaterial und ein Naturkautschuk-Haftkleber als Haftkleber verwendet, beträgt die Auftragsmenge vorzugsweise ca. 20 g/m².

Zwischen der Haftklebeschicht (4) und dem Endstreifen (2) liegt vorzugsweise ein Haftvermittler (Primer) vor. Beispiele für den Haftvermittler sind Verbindungen wie Naturkautschuklatices mit Methacrylaten gepfropft, Aminosilane, Polyvinylpyrrolidone, Ethylenvinylacetat-Latices, Butadien-Styrol-Copolymere und Butylacrylat-Acrylnitril-Copolymere. Der Haftvermittler wird vorzugsweise in einer Menge von 0,01 bis 5 g/m² aus einem wäßrigen oder organischen Lösungsmittel aufgetragen.

Alternativ oder vor Aufbringen des Primers kann der Endstreifen (2) auch mittels Corona-Entladung oder Flammenbehandlung vorbehandelt werden, um eine bessere Haftung zu bewirken.

Das erfindungsgemäß verwendete Klebeband (1) ist ein selbstklebendes Klebeband. Selbstklebende Klebebänder bestehen aus einem Trägermaterial und aus einem ganzflächig oder teilflächig einseitig auf dem Trägermaterial aufgetragenen Haftkleber (3). Der auf dem Klebeband (1) aufgetragene Haftkleber (3) kann mit dem auf dem Endstreifen (2) aufgetragenen Haftkleber (4) identisch oder von diesem verschieden sein. Die teilflächige Beschichtung des Klebebandes mit einem Haftkleber (3) kann in einem beliebigen Muster vorliegen und schließt beispielsweise ein punktförmiges oder streifenförmiges Aufbringen des Haftklebers ein. Vorzugsweise ist das selbstklebende Klebeband (1) weiterhin mit einem Haftvermittler (Primer) zwischen dem Trägermaterial und dem Haftkleber (3) sowie einer antihaftenden Schicht (release coating) auf der dem Haftkleber (3) gegenüberliegenden Seite des Trägermaterials versehen. Das Trägermaterial kann ein Textil, ein Papier, ein Karton, eine Kunststoffolie, ein Kunststoffschaum oder eine Metallfolie sein. Die antihaftende Schicht besteht im allgemeinen aus Polymeren mit einem hohen Molekulargewicht und einer geringen kritischen Oberflächenenergie. Die Polymere dürfen mit dem Haftkleber (3) nicht mischbar sein, so daß sie nicht in diesen hineindiffundieren und die Haftstärke des Haftklebers (3) beeinträchtigen.

Zur Herstellung der erfindungsgemäßen Klebebandrolle wird zunächst eine Klebebandmutterrolle und eine Endstreifenmutterrolle hergestellt.

Zur Herstellung der erfindungsgemäß verwendeten Klebebandmutterrolle wird das Klebebandträgermaterial, welches aufgerollt in einer bestimmten Breite, beispielsweise 1300 mm, vorliegt, abgewickelt. Vorzugsweise wird dann ein Haftvermittler (Primer) auf eine Seite des Trägermaterials appliziert und getrocknet. Auf der gegenüberliegenden Seite des Trägermaterials wird dann vorzugsweise eine antihaftende Schicht aufgetragen und getrocknet. Darauf wird auf der Seite, auf der vorzugsweise eine getrocknete Haftvermittlerschicht (Primerschicht) vorliegt, der Haftkleber (3) aufgetragen und getrocknet. Hierauf folgen eine Konditionierung zur Rückführung der während dem Trocknungsverfahren entwichenen Feuchtigkeit, wodurch Faltenbildung und Sprödigkeit des Produktes verhindert werden, und das Aufwickeln der Klebebandmutterrolle.

Die Herstellung der Endstreifenmutterrolle erfolgt im wesentlichen wie die Herstellung der Klebebandmutterrolle. Das Trägermaterial der Endstreifenmutterrolle wird abgewickelt und vorzugsweise mit einer Haftvermittlerschicht (Primerschicht) auf einer Seite des Trägermaterials, welches vorzugsweise aus Papier oder Kunststoffolie besteht, versehen. Die Haftvermittlerschicht wird dann getrocknet. Insbesondere bei Verwendung einer Kunststoffolie als Trägermaterial des Endstreifens wird anschließend vorzugsweise eine antihaftende Schicht auf der der Haftvermittlerschicht gegenüberliegenden Seite des Trägermaterials aufgebracht und getrocknet. Darauf wird auf der Seite, auf der vorzugsweise eine getrocknete Haftvermittlerschicht vorliegt, der Haftkleber (4) aufgetragen und getrocknet. Hierauf folgt eine Konditionierung zur Rückführung der während dem Trocknungsverfahren entwichenen Feuchtigkeit, wodurch Faltenbildung und Sprödigkeit des Produktes verhindert werden. Die Endstreifenmutterrolle wird dann derart aufgerollt, daß die Haftkleberschicht innen liegt. Die antihaftende Schicht verhindert, daß es bei dem Abwickeln der Endstreifenmutterrolle, welches im weiteren Verfahrenslauf notwendig wird, zu Verblockungen und damit zu einem Abwickeln mit Abrissen und Ausreißen kommt, was nicht erwünscht ist.

Die erfindungsgemäße Klebebandrolle mit selbstklebendem Endstreifen wird aus der Klebebandmutterrolle und der Endstreifenmutterrolle wie folgt hergestellt:

Die Endstreifenmutterrolle wird abgewickelt und über die gesamte Breite, z.B. 1300 mm, in die gewünschte Länge geschnitten, in der Regel 1 bis 2 cm. Gleichzeitig wird die Klebebandmutterrolle des Klebebandes, die vorzugsweise die gleiche Breite wie die Endstreifenmutterrolle haben sollte, abgewickelt. Der abgeschnittene Endstreifen (2) wird dann auf die abgerollte Klebebandbahn nach Abrollen der gewünschten Länge der Klebebandmutterrolle, z.B. 60 m, in einer Art und Weise angedrückt, daß der Endstreifen mit der Seite ohne Haftkleber an dem Klebeband haften bleibt. Das Klebeband wird anschließend derart geschnitten, daß der Endstreifen am Ende des Klebebandes (1) befestigt ist. Vor dem Aufwickeln des Klebebandes (1) mit dem Endstreifen (2) wird dann die Bahn in mehrere Abschnitte geschnitten, so daß die erfindungsgemäßen Klebebandrollen mit Endstreifen erhalten werden. Beispielsweise lassen sich aus einer Mutterrolle einer Breite von 1300 mm 100 erfindungsgemäße Klebebandrollen einer Breite von jeweils 13 mm erhalten.

Die Erfindung beinhaltet auch die Verwendung eines mit einem Haftkleber beschichteten Trägermaterials aus Papier oder Kunststoff für einen Endstreifen eines Klebebandes.

## Patentansprüche

1. Klebebandrolle, umfassend ein Klebeband (1), an dessen aussenliegendem Ende ein Endstreifen (2) angebracht ist, dadurch gekennzeichnet, daß der Endstreifen innenseitig teilflächig oder ganzflächig mit einem Haftkleber (4) beschichtet ist.

2. Klebebandrolle gemäß Anspruch 1, dadurch gekennzeichnet, daß der Endstreifen (2) innenseitig in einer Menge mit einem Haftkleber (4) beschichtet ist, so daß er gegenüber Stahl eine Klebkraft von 0,01 bis 40 N/25 mm (nach AFERA 4001, PSTC-1, Auswertung nach DIN 53539C) aufweist.

3. Klebebandrolle gemäß Anspruch 1 oder 2, dadurch gekennzeichnet, daß der Endstreifen (2) aus Papier oder einer Kunststoffolie besteht.

4. Klebebandrolle gemäß Anspruch 3, dadurch gekennzeichnet, daß die Kunststoffolie aus Homo- oder Copolymeren von Ethylen, Propylen und Vinylchlorid, Polyamid, Polyester oder Polyimid oder Mischungen aus zwei oder mehreren dieser Polymere besteht.

5. Klebebandrolle gemäß einem der Ansprüche 3 und 4, dadurch gekennzeichnet, daß die Aussenseite des Papiers oder der Kunststoffolie eine antihaftende Schicht trägt.

6. Klebebandrolle gemäß einem oder mehreren der vorhergehenden Ansprüche, dadurch gekennzeichnet, daß zwischen dem Haftkleber (4) und dem Endstreifen (2) eine Haftvermittlerschicht vorliegt.

7. Verfahren zur Herstellung einer Klebebandrolle gemäß einem oder mehreren der vorhergehenden Ansprüche, umfassend die Schritte:
a) Herstellen einer Endstreifenmutterrolle umfassend ein Endstreifenträgermaterial mit einem Haftkleber durch
1) Einseitiges Beschichten des Endstreifenträgermaterials mit einem Haftkleber (4);
2) Aufwickeln des Endstreifenträgermaterials, wobei der Haftkleber zur Innenseite gerichtet ist, zur Endstreifenmutterrolle;
b) Abschneiden des Endstreifens (2) von der Endstreifenmutterrolle;
c) Applizieren des Endstreifens (2) auf ein Klebeband (1);
d) Aufwickeln des Klebebandes zur Klebebandrolle.

8. Verwendung eines mit einem Haftkleber beschichteten Papiers oder Kunststoffs für einen Endstreifen eines Klebebandes.
